# EUROPEAN PATENT SPECIFICATION

(11) **EP 3 041 383 B1**
(45) Date of publication and mention of the grant of the patent: **15.05.2019**
(21) Application number: 14840608.5
(22) Date of filing: 28.05.2014
(51) Int. Cl.: B44C 1/22, H04B 1/38

(54) **COVER MEMBER AND METHOD FOR MANUFACTURING THE SAME**
ABDECKUNGSELEMENT UND VERFAHREN ZUR HERSTELLUNG DAVON
ÉLÉMENT DE PROTECTION ET PROCÉDÉ DE FABRICATION DE CELUI-CI

(30) Priority: 02.09.2013 KR 20130104890
(43) Date of publication of application: 13.07.2016
(73) Proprietor: Samsung Electronics Co., Ltd., Gyeonggi-do 16677 (KR)
(72) Inventor: HWANG, Chang-Youn, Hwaseong-si Gyeonggi-do 445-787 (KR); LEE, Young-Jae, Anyang-si Gyeonggi-do 430-705 (KR); HAN, Kyoung-Bin, Gumi-si Gyeongsangbuk-do 730-818 (KR); YOON, Byoung-Uk, Hwaseong-si Gyeonggi-do 445-790 (KR)
(74) Representative: Grootscholten, Johannes A.M.
(86) International application number: PCT/KR2014/004757
(87) International publication number: WO 2015/030348

(56) References cited:
- WO-A2-2012/170892
- KR-A- 20040 108 303
- KR-A- 20100 080 309
- KR-A- 20110 085 273
- KR-A- 20110 101 350
- KR-B1- 100 791 721
- KR-B1- 100 791 721
- US-A1- 2008 152 859
- US-A1- 2012 088 077

## Description

### Technical Field

The present disclosure relates to a cover member such as an exterior case or a detachable exterior cover of an electronic device including a portable device, and a method for manufacturing the same. More particularly, the present disclosure relates to a method for manufacturing an exterior case of a portable device using an inexpensive material that provides a high quality look and protection of a genuine material.

### Background Art

Electronic devices including portable devices refer to devices that can be carried and that provide a variety of entertainment programs for users' entertainment. Examples of portable devices include cellular phones, Motion Pictures Expert Group (MPEG-1 or MPEG-2) Audio Layer III (MP3) players, Portable Digital Assistants (PDAs), Portable Multimedia Players (PMPs), electronic books, and the like.

Assuming portable devices of the related art have only insignificant differences in price and functions, users generally prefer portable devices having better designs. In this regard, a design of the exterior, more specifically, an exterior case, of a portable device may be an important priority to users in selecting a portable device.

To refine the exterior case of a portable device, a metallic material, for example, a lightweight aluminum alloy, may be used. However, such a metallic material is difficult to process into a particular shape. For example, there are many difficulties in implementing the design of the exterior case of the portable device in a desired shape with the metallic material.

Moreover, when the exterior case of the portable device is formed of the metallic material, the portability of the device may be lowered due to the weight of the metallic material. Thus, synthetic resin is often used as a material for the exterior case of the portable device because it is easy to mold and process and it is also suitable for mass production. When the exterior case of the portable device is manufactured by injection using synthetic resin, an electrically non-conductive metallic material, such as tin, may be used to express metallic texture.

For sophistication of the exterior case of the portable device, a genuine material, such as leather, or a fake material having a texture similar to that of leather may be processed and may be attached to or may be integrated with an outer surface of the exterior case.

Also, to refine the exterior case of the portable device, a pattern may be processed on a mold and the mold may be coated using paint having a color and texture that are similar to those of a genuine material.

The above information is presented as background information only to assist with an understanding of the present disclosure. No determination has been made, and no assertion is made, as to whether any of the above might be applicable as prior art with regard to the present disclosure.

US-A1-2012/0088077 and KR-B1-100 791 721 are acknowledged as related prior art.

### Disclosure of Invention

### Technical Problem

However, such a method for processing a genuine material or a fake material having genuine-like texture and attaching or integrating the processed material to the exterior case of the portable device has some limitations in ensuring the durability of the exterior case of the portable device. Moreover, such a method may increase the overall cost of the portable device due to the cost of the genuine material, lower product yield, and increased production time, thereby degrading product competitiveness.

Furthermore, the method for manufacturing the exterior case by pattern-processing a mold to refine the exterior case of the portable device has limitations in implementing the exterior having genuine-like texture. In addition, it may degrade a quality completion level of an exterior of the exterior case in comparison to when a genuine material is used.

Therefore, a need exists for an exterior case of a portable device using an inexpensive material that provides the quality look and protection of a genuine material, thereby guaranteeing the cost competitiveness of the exterior case, and a method for manufacturing the exterior case.

### Technical Solution to Problem

The invention is defined in the appended claims.

The following embodiments are examples for illustrative purpose. Aspects of the present disclosure are to address at least the above-mentioned problems and/or disadvantages and to provide at least the advantages described below. Accordingly, an aspect of the present disclosure is to provide a cover member such as an exterior case of a portable device using an inexpensive material that provides the quality look and protection of a genuine material, and a method for manufacturing the cover member.

Another aspect of the present disclosure is to provide a cover member of a portable device that provides the quality look and protection of a genuine material, while having no restriction on its design, and a method for manufacturing the cover member.

Another aspect of the present disclosure is to provide a cover member of a portable device that provides the quality look and protection of a genuine material, while guaranteeing the durability of the exterior case, and a method for manufacturing the cover member.

In accordance with further aspect of the present disclosure, a cover member of an electronic device including a portable device is provided. The cover member includes a case on at least a portion of which a material pattern is formed, a color layer formed on the material pattern provided on the case and a Smooth Feel (SF) coating layer on the color layer, in which a portion of the color layer is at least partially marked different from the material pattern.

The marked portion may be formed by film-removing the portion of the color layer using a laser.

The exterior case may further include a primer layer between the color layer and the SF coating layer.

The primer layer may be formed on the marked portion.

The marked portion may be a color of the case through film-removal of the color layer.

The marked portion may be formed by property-changing the portion of the color layer by using a laser.

The marked portion may be in a color that is different from that of the color layer.

The exterior case may further include a primer layer between the color layer and the SF coating layer.

The marked portion may include a printing layer that is printed at least partially differently from the material pattern on the color layer by using a Direct Digital Printing (DDP) method.

The exterior case may further include a primer layer on the color layer and the printing layer.

The material pattern may provide a leather texture and the marked portion may provide a texture in a stitch form.

The case may be formed by injection molding using a mold in which the material pattern is processed.

In accordance with another aspect of the present disclosure, a method for manufacturing a cover member of an electronic device including a portable device is provided. The method includes manufacturing a case that comprises at least one material pattern on at least a portion thereof, applying a color on the material pattern, marking an additional material pattern on a surface of the color-coated case, and applying an SF layer on the color-coated material pattern.

In accordance with another aspect of the present disclosure, a method for manufacturing a cover member of an electronic device including a portable device is provided. The method includes manufacturing a case that comprises at least one material pattern on at least a portion thereof, applying a color on the material pattern, printing an additional material pattern on a surface of the color-applied case, and applying an SF layer on the color-applied material pattern.

In accordance with another aspect of the present disclosure, a detachable exterior case for an electronic device is provided, the detachable exterior case comprises: a case formed with a first material pattern on an outer surface, the first material pattern includes random pattern and regular or irregular grooves or protrusions; a color layer on the material pattern; a second material pattern providing a texture in a stitch form; and a Smooth Feel (SF) coating layer on the color layer and the second material pattern.

In accordance with another aspect of the present disclosure, the detachable exterior case further comprises a primer layer formed between the color layer and the SF coating layer, and between the second material pattern and the SF coating layer, respectively. The primer layer and the SF coating layer are made of a transparent material.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

As is apparent from the following description, the exterior case according to various embodiments of the present disclosure provides an exterior of a case having the quality look and texture of a genuine material and allows superior product durability and mass production at low cost, guaranteeing cost competitiveness.

More particularly, the exterior case according to various embodiments of the present disclosure provides an exterior having a stereoscopic texture as well as texture like that of a real material, improves a design value through free exterior designing, and is able to be mass produced using a mold.

Moreover, various embodiments of the present disclosure are suitable for an exterior case that provides a leather texture.

### Brief Description of Drawings

The above and other aspects, features, and advantages of certain embodiments of the present disclosure will be more apparent from the following description taken in conjunction with the accompanying drawings in which:
FIG. 1 is a perspective view illustrating an exterior of a portable device according to an embodiment of the present disclosure;
FIGS. 2a, 2b and 2c are cross-sectional views sequentially illustrating a process of manufacturing an exterior case of a portable device according to an embodiment of the present disclosure;
FIG. 3 is a cross-sectional view illustrating a structure for manufacturing an exterior case of a portable device based on a change in property of a color layer of the exterior case according to an embodiment of the present disclosure;
FIG. 4 is a cross-sectional view illustrating a structure for manufacturing an exterior case of a portable device using a Direct Digital Printing (DDP) method according to an embodiment of the present disclosure;
FIG. 5 illustrates an outer surface of a case on which a leather-material pattern is formed according to an embodiment of the present disclosure;
FIG. 6 illustrates an outer surface of a case on which a leather-material pattern and a stitch pattern are formed according to an embodiment of the present disclosure;
FIG. 7 is a flowchart illustrating a method for manufacturing an exterior case of a portable device according to an embodiment of the present disclosure; and;
FIG. 8 is a flowchart illustrating a method for manufacturing an exterior case of a portable device according to an embodiment of the present disclosure.

Throughout the drawings, like reference numerals will be understood to refer to like parts, components, and structures.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The present disclosure will be described as being applied to 'portable devices'. However, the term 'portable device' is a general term and embodiments of the present disclosure may be equally applied to any one of a mobile phone, a palm-size Personal Computer (PC), a Personal Communication System (PCS), a Personal Digital Assistant (PDA), a Hand-Held PC (HPC), a smart phone, a Wireless Local Area Network (WLAN) terminal, a laptop computer, a netbook, a tablet PC, an electronic book, and the like.

Therefore, the use of the term 'portable device' should not be used to limit application of the embodiments of the present disclosure to a device of a particular type.

Moreover, various embodiments of the present disclosure are not necessarily limited to portable devices, and may be equally applied to any electronic device to which a case having an exterior is applied.

Embodiments of the present disclosure will be described using a 'smart phone'.

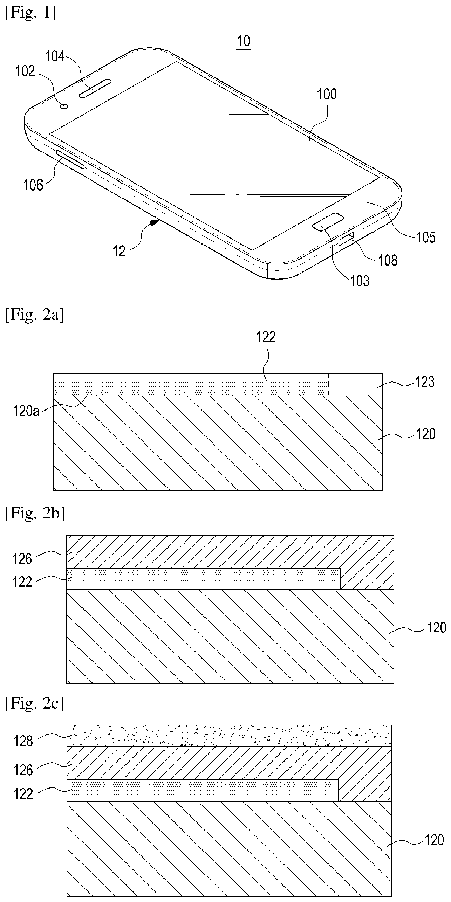

FIG. 1 is a perspective view illustrating an exterior of a portable device according to an embodiment of the present disclosure.

Referring to FIG. 1, a portable device 10 may be a bar type, on a front surface of which a touch screen 100 is disposed and on a rear surface of which a battery cover, although not shown, is disposed. Although the touch screen 100 is disposed globally on the front surface of the portable device 10, a camera lens 102 and a speaker 104 are disposed in an upper portion of the front surface and a home touch button 103 and a back touch button 105 are disposed in a lower portion of the front surface. An on/off key (not shown) is disposed on a lateral surface of the portable device 10, a volume control key 106 is disposed on another lateral surface of the portable device 10, and an earphone terminal or port 108 is disposed on further another lateral surface of the portable device 10.

Since multiple lateral surfaces and a bottom surface of an exterior case 12 of the portable device 10 are exposed to the outside, various embodiments of the present disclosure are applied to all or only some outer surfaces of the exterior case 12.

While various embodiments of the present disclosure will be described as being applied to the exterior case 12 of the portable device 10 because the exterior case 12 of the portable device 10 is shown to users and contacts the users, various embodiments of the present disclosure may also be applied to an exterior cover that protects the portable device 10 and is mounted on and removable from the portable device 10 as an accessory. The mentioned exterior cover refers to a cover which protects the portable device 10 from an external environment, for example, a shock, such as dropping, is provided as an accessory for expressing a user's individuality with its various shapes or colors, and protects a front surface (i.e., a touch screen portion).

Meanwhile, as described above, various embodiments of the present disclosure are not necessarily limited to portable devices, and may be equally applied to any electronic device to which a case having an exterior is applied. Also various embodiments of the present disclosure may be applied to a cover member which is detachable to the electronic device.

Referring to the accompanying figures, a description will now be made of a structure of a case applied to the exterior case 12 of the portable device 10 to implement (i.e., imitate) a leather material mainly used for sophistication among a number of materials, and a method for manufacturing the case.

In the following description, the term 'leather material' generally includes crocodile leather, cow leather, or leather of other animals. A leather material not only has high durability but also provides outward sophistication to a user, and a soft texture to a user's touch. The leather material may also have a substantially planar outer surface or a slightly uneven outer surface, that is, an outer surface having a random pattern and regular or irregular grooves or protrusions.

While it will be described that a leather-material texture is expressed on the exterior of the exterior case 12 in the current embodiment of the present disclosure, the current embodiment may also be equally applied to express patterns having characteristics of other materials, for example, a pattern like a tree's annual rings, or any type of material having various patterns, for example, a genuine texture of a natural or an artificial material, such as rubber.

FIGS. 2a, 2b and 2c are cross-sectional views sequentially illustrating a process of manufacturing an exterior case of a portable device according to an embodiment of the present disclosure.

Referring to FIGS. 2a, 2b and 2c, a structure of the exterior case 12 applied to the portable device 10 according to one of various embodiments of the present disclosure will be described. The exterior case 12 shown in FIGS. 2a to 2c uses a pattern and a texture that are similar to those of leather. The current embodiment may be applied to the exterior case 12 of the portable device 10 and may also be applied to at least some exterior surfaces exposed when the exterior case 12 is mounted on the portable device 10.

The exterior case 12 may include a case 120 including a material pattern, a color layer 122 coated on the case 120, an additional material pattern provided in a marked portion, which is part of the color layer 122, a primer layer 126, and a Smooth Feel (SF) layer 128.

The case 120 is mass-produced by a mold (not shown). However, the case 120 is not necessarily manufactured by a mold, and may be manufactured using a different process. For example, the case may be manufactured using post-processing, mechanical/metal processing, deposition, or a 3-Dimensional (3D) printer. In the following description, the case manufactured using a mold will be used as an example. A material pattern is processed on the mold, such that the material pattern is formed on an outer surface of the case 120 injection-molded by the mold. For example, on the outer surface of the injected case 120, a material pattern, that is, a leather-material pattern, and a pattern for stitches may be formed. For the material pattern provided in the mold, the pattern shape is processed using a mechanical processing or a chemical etching.

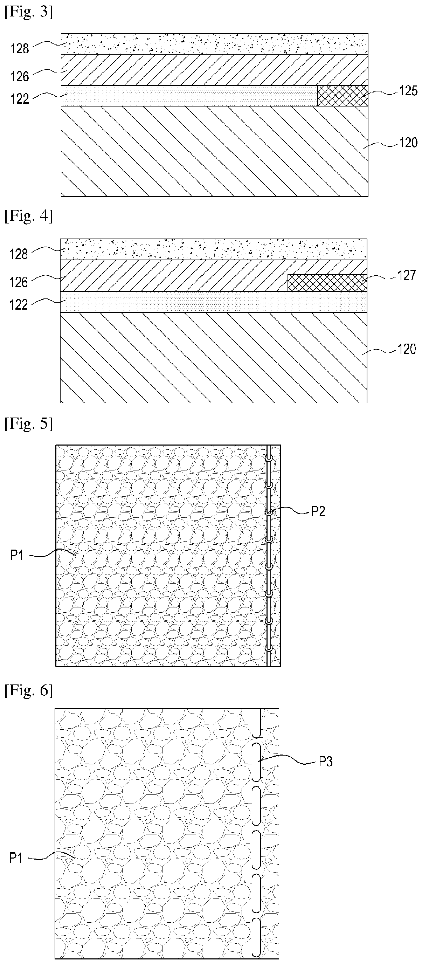

FIG. 5 illustrates an outer surface of a case on which a leather-material pattern is formed according to an embodiment of the present disclosure.

Referring to FIG. 5, material patterns P1 and P2 are formed on the case. The material pattern P1 is similar to a leather pattern. The material pattern P1 is formed by the mold on a surface 120a of the case 120 of FIG. 2a, and along a circumference of the surface 120a. Also, the spaced and repeated material pattern P2 for representing stitches is shown. As will be described below, a laser may be locally applied to a portion of the material pattern P1 to form a material pattern having another color or may also be applied to the material pattern P2 to form a material pattern having another color. In this case, the material pattern P2 may be a draft for applying a laser.

The color layer 122 in FIG. 2c is provided on the surface 120a of the case 120 in a color that is the same as or similar to a genuine material to double the effect of the material pattern of the case 120. The color layer 122 may be formed on the surface 120a using coating or deposition. The color layer 122 may also be coated or deposited in various colors depending on the material used to form the exterior case. The color layer 122 is formed to a thickness of substantially 3∼4 *µ*m on the material pattern of the case 120. The term 'substantially' may mean that a cited feature, parameter or value does not need to be accurately achieved and it is achieved not to exclude effects to be provided by deviation, change, or characteristics including an allowable error, a measurement error, a measurement accuracy limitation, and other elements known to those of ordinary skill in the art.

A material pattern P3 (hereinafter, a second material pattern) having a color that is different from that of the material pattern P1 or P2 (hereinafter, a first material pattern) may be configured in various ways in a marked portion (123 of FIG. 2a). A description will now be made of a structure of a material pattern with reference to the accompanying figures.

The marked portion 123 is a region in which the second material pattern is formed. The marked portion 123 may be a portion of the color layer 122 that is film-removed by applying heat (e.g., using a laser) applied to a portion of the color layer 122 where the first material pattern is formed. Once the laser is applied to the portion of the color layer 122 (the marked portion 123) where the first material pattern is formed, the heat-applied portion of the color layer 122 is film-removed. Thereafter, a primer layer 126 is formed on the color layer 122, such that the primer layer 126 is formed on the film-removed portion of the color layer 122. The SF layer 128 is provided on the primer layer 126. The primer layer 126 or the SF layer 128 is formed using coating. Since the primer layer 126 and the SF layer 128 are made of a transparent material, the second material pattern is implemented and seen from the outside with the material pattern and color provided in the case 120. The primer layer 126 is formed to a certain thickness to protect the first and second material patterns formed in the case 120 and provide abrasion resistance, and for ease in attachment. The primer layer 126 is formed to a thickness of substantially 3∼4*µ*m. The SF layer 128 is a surface protection layer formed to provide gloss as well as a soft texture as that of genuine leather. The SF layer 128 is formed to a thickness of substantially 25∼30*µ*m. The gloss may be adjusted depending on a change in the applied thickness.

FIG. 3 is a cross-sectional view illustrating a structure for manufacturing an exterior case of a portable device based on a change in property of a color layer of the exterior case according to an embodiment of the present disclosure.

Referring to FIG. 3, the exterior case 12 is manufactured based on the change in property of the color layer 122. A pattern layer 125 is a portion that is discolored by applying heat (e.g., using a laser) to a portion of the color layer 122 formed on the first material pattern. Once the laser is applied to the portion of the color layer 122 (marked portion) where the first material pattern is formed, the color of the heat-applied portion of the color layer 122 becomes different from that of the color layer 122. The primer layer 126 is provided on the color layer 122 and the SF layer 128 is provided on the primer layer 126. The primer layer 126 or the SF layer 128 is formed using coating. Since the primer layer 126 and the SF layer 128 are made of a transparent material, the pattern layer 125 is implemented and seen from the outside in a color that is different from that of the case 120. The primer layer 126 is formed to a sufficient thickness to protect the first and second material patterns formed on the case 120 and to provide abrasion resistance, and for ease in attachment. The primer layer 126 is formed to a thickness of substantially 3∼4*µ*m. The SF layer 128 is a surface protection layer formed to provide gloss as well as a soft texture as that of genuine leather. The SF layer 128 is formed to a thickness of substantially 25∼30*µ*m. The gloss may be adjusted depending on a change in the coated thickness.

FIG. 4 is a cross-sectional view illustrating a structure for manufacturing an exterior case of a portable device using a Direct Digital Printing (DDP) method according to an embodiment of the present disclosure.

Referring to FIG. 4, a second material pattern 127 may be formed on the color layer 122 using the DDP method, instead of using thermal processing, such as a laser. If the second material pattern 127 is formed on the color layer 122 using the DDP method, reference numeral 127 may indicate a printing layer. The printing layer 127 is visible from the outside through the primer layer 126 and the SF layer 128. The primer layer 126 and the SF layer 128 are made of a transparent material, such that the second material pattern 127 is implemented in a color that is different from that of the material pattern provided in the case 120. The primer layer 126 is formed to a sufficient thickness to protect the first and second material patterns formed in the case 120 and to provide abrasion resistance, and for ease in attachment. The primer layer 126 is formed to a thickness of substantially 3∼4*µ*m. The SF layer 128 is a surface protection layer formed to provide gloss as well as a soft texture as that of genuine leather. The SF layer 128 is formed to a thickness of substantially 25∼30*µ*m. The gloss may be adjusted depending on a change in the applied thickness.

FIG. 6 illustrates an outer surface of a case on which a leather-material pattern and a stitch pattern are formed according to an embodiment of the present disclosure.

Referring to FIG. 6, a portion of the exterior case 12 on which the second material pattern P3 is formed is illustrated. Along a circumference of the case 120, a spaced and repeated material pattern is formed, such that the second material pattern P3 that is different from the first material pattern is formed using a laser or the DDP method. By applying a laser to a portion of the spaced and repeated first material pattern P2, the second material pattern P3 for stitches is formed. With the first material pattern P1 and the second material pattern P3 shown to the outside, the exterior of the injected case 12 has a pattern that is very similar to leather.

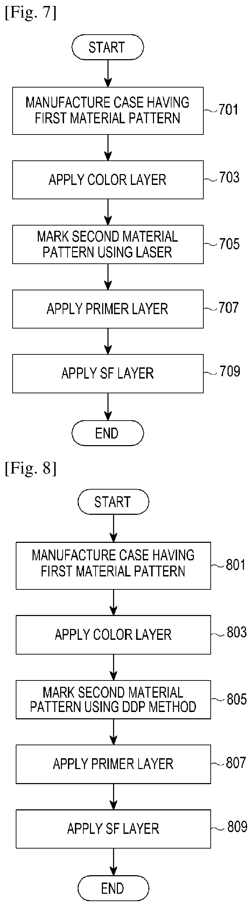

FIGS. 7 and 8 are flowcharts illustrating methods for manufacturing an exterior case of a portable device according to embodiments of the present disclosure.

Referring to FIG. 7, at least one material pattern is provided on the surface of the case on which the at least one material pattern is formed at operation 701. The method mass-produces the case using a mold (not shown), but the case is not necessarily manufactured using the mold and the case may also be manufactured using post-processing, mechanical/metal processing, deposition, or a 3D printer.

At operation 703, a color that is the same as or similar to that of a material to be used is applied on the case on which the material pattern is formed. The color is applied to a thickness of substantially 3∼4*µ*m.

At operation 705, the color-applied case may be changed by applying heat (e.g., using a laser) to a portion of the color layer on which the material pattern is formed. Once the laser is applied to the portion of the color layer, the color of the laser-applied portion becomes different from that of the color layer due to film-removal or property-change. At operation 707, the primer layer is formed on the case on which the material pattern is formed. The primer layer is formed to a thickness of substantially 3∼4*µ*m.

At operation 709, the SF layer is formed on the primer layer. The SF layer protects the outer surface and provides gloss and texture similar to that of a genuine material, for example, a genuine leather-like texture, such as faux leather. The SF layer is formed to a thickness of substantially 25∼30*µ*m. Once the case is manufactured in this order, a material pattern that is similar to a genuine material is implemented on the case.

Referring to FIG. 8, the color layer is formed having a material that is the same as or similar with a material intended by the material pattern on the outer surface of the case on which the at least one material pattern is provided at operation 801. The color layer may be formed to a thickness of substantially 3∼4*µ*m.

At operation 803, a color that is the same as or similar to that of a material to be used is applied on the case on which the material pattern is formed. In this case, an additional material-pattern color may be printed on the color layer on which the material pattern is formed, by using the DDP method at operation 805. After this processing, the additional material pattern color is provided as the printing layer of a certain thickness. At operation 807, the primer layer is formed on the case where the material pattern is formed. The primer layer is formed to a thickness of substantially 3∼4*µ*m. The applied thickness of the primer layer may be adjusted.

At operation 809, the SF layer is formed on the primer layer. The SF layer protects the outer surface and provides the quality look and texture of a genuine material, for example, leather. The SF layer is formed to a thickness of substantially 25∼30*µ*m. The applied thickness of the SF layer may be adjusted and the degree of softness or gloss may be adjusted.

The other effects may be explicitly or implicitly disclosed in the description of the present disclosure.

While the present disclosure has been shown and described with reference to various embodiments thereof, it will be understood by those skilled in the art that various changes in form and details may be made therein without departing from the scope of the present disclosure as defined by the appended claims.

## Claims

1. A cover member comprising:
a case (120) on at least a portion of which a material pattern is formed;
a color layer (122) formed on top of the material pattern provided on the case (120); and
a Smooth Feel "SF" coating layer (128) on the color layer (122), wherein the Smooth Feel SF coating layer (128) is transparent,
**characterized in that**
the material pattern is formed on an outer side of the case (120);
the color layer (122) is disposed between the Smooth Feel SF coating layer (128) and the outer side of the case (120), and
the color layer (122) comprises a marked portion (123) that is at least partially marked different from the material pattern and visually exposed.

2. The cover member of claim 1, further comprising a primer layer (126) between the color layer (122) and SF coating layer (128).

3. The cover member of claim 2, wherein the primer layer (126) is formed on the marked portion (123) of the color layer (122).

4. The cover member according to any of the foregoing claims, wherein the marked portion (123) of the color layer (122) comprises a printing layer (127) that is printed at least partially differently from the material pattern on the color layer (122) by using a Direct Digital Printing "DDP" method.

5. The cover member of claim 4, further comprising a primer layer (126) on the color layer (122) and the printing layer (127).

6. The cover member according to any of the foregoing claims, wherein the material pattern provides a leather-like texture and the marked portion (123) provides a texture in a stitch form.

7. A method for manufacturing a cover member, the method comprising:
forming a case (120) that comprises at least one material pattern on at least a portion thereof;
applying a color layer (122) on top of the material pattern;
applying a transparent Smooth Feel SF coating layer (128),
**characterized by**
forming the material pattern on an outer side of the case (120);
applying the color layer (122) on top of the material pattern on the outer side of the case (120);
applying a marked portion (123) on the color layer (122) that is at least partially marked different from the material pattern and visually exposed; and
applying the Smooth Feel SF coating layer (128) on top of the color-applied material pattern on the outer side of the case (120).

8. The method of claim 7, comprising the step of marking an additional material pattern on a surface of the color-applied case.

9. The method of claim 7 or 8, wherein the material pattern provides a leather-like texture and the additional material pattern provides a texture in a stitch form.

10. The method of claim 7 or 8, wherein the additional material pattern is formed by film-removing or property-changing a portion of the color layer (122) using a laser.

11. The method according to any of claims 7-10, further comprising:
applying a primer layer (126) on the color-applied material patterns,
wherein the SF coating layer (128) is formed on a surface of the primer layer (126).

12. The method according to any of claims 7-11, wherein the printing of the additional material pattern comprises forming a printing layer (127) that is at least partially different from the material pattern by using a Direct Digital Printing DDP method.

13. The cover member according to any of claims 1-6 wherein:
the material pattern is provided with a first material pattern including random pattern and regular or irregular grooves or protrusions, and
the portion of the color layer is provided with a second material pattern providing a texture in a stitch form.

14. The cover member according to claim 13, wherein the second material pattern is at least one of a portion of the outer surface exposed by film-removing the portion of the color layer (122), a printing layer (127) that is printed at least partially on the color layer (122) by using a Direct Digital Printing DDP method, and a portion of the color layer (122) formed by property-changing the portion of the color layer (122).

15. The cover member according to claim 13, further comprising:
a primer layer (126) formed between the color layer (122) and the SF coating layer (128), and between the second material pattern (P3) and the SF coating layer (128), respectively, wherein the primer layer (126) is made of a transparent material.

## Patentansprüche

1. Abdeckungselement, das Folgendes umfasst:
ein Gehäuse (120), wobei wenigstens an einem Abschnitt davon ein Materialmuster ausgebildet ist;
eine Farbschicht (122), die auf dem an dem Gehäuse (120) vorgesehenen Materialmuster ausgebildet ist; und
eine Überzugsschicht (128) mit glatter Haptik (SF-Überzugsschicht, Smooth Feel), wobei die SF-Überzugsschicht (128) transparent ist,
**dadurch gekennzeichnet, dass**
das Materialmuster an einer Außenseite des Gehäuses (120) ausgebildet ist;
die Farbschicht (122) zwischen der SF-Überzugsschicht (128) und der Außenseite des Gehäuses (120) angeordnet ist, und
die Farbschicht (122) einen markierten Abschnitt (123) umfasst, der wenigstens zum Teil unterschiedlich von dem Materialmuster markiert und visuell abgesetzt ist.

2. Abdeckelement nach Anspruch 1, weiterhin umfassend eine Grundierschicht (126) zwischen der Farbschicht (122) und der SF-Überzugsschicht (128).

3. Abdeckelement nach Anspruch 2, wobei die Grundierschicht (126) auf dem markierten Abschnitt (123) der Farbschicht (122) ausgebildet ist.

4. Abdeckelement nach einem der vorstehenden Ansprüche, wobei der markierte Abschnitt (123) der Farbschicht (122) eine Druckschicht (127) umfasst, die mit Hilfe eines Direkten Digitaldruckverfahrens (DDP-Verfahren, Direct Digital Printing) wenigstens zum Teil unterschiedlich von dem Materialmuster auf der Farbschicht (122) aufgedruckt wird.

5. Abdeckelement nach Anspruch 4, weiterhin umfassend eine Grundierschicht (126) auf der Farbschicht (122) und der Druckschicht (127).

6. Abdeckelement nach einem der vorstehenden Ansprüche, wobei das Materialmuster eine lederartige Textur bereit stellt und der markierte Abschnitt (123) eine Textur in einer Nahtform bereit stellt.

7. Verfahren zur Herstellung eines Abdeckungselements, wobei das Verfahren Folgendes umfasst:
Ausbilden eines Gehäuses (120), das wenigstens an einem Teil davon ein Materialmuster umfasst;
Aufbringen einer Farbschicht (122) auf dem Materialmuster;
Aufbringen einer transparenten Überzugsschicht (128) mit glatter Haptik (SF-Überzugsschicht, Smooth Feel),
**gekennzeichnet durch**
Ausbilden des Materialmusters an einer Außenseite des Gehäuses (120);
Aufbringen der Farbschicht (122) auf dem Materialmuster an der Außenseite des Gehäuses (120);
Aufbringen eines markierten Abschnitts (122) auf der Farbschicht (122), der wenigstens zum Teil unterschiedlich von dem Materialmuster markiert und visuell abgesetzt ist; und
Aufbringen der SF-Überzugsschicht (128) auf dem mit der Farbschicht versehenen Materialmuster an der Außenseite des Gehäuses (120).

8. Verfahren nach Anspruch 7, das einen Schritt zur Markierung eines zusätzlichen Materialmusters auf einer Oberfläche des mit der Farbschicht versehenen Gehäuses umfasst.

9. Verfahren nach Anspruch 7 oder 8, wobei das Materialmuster eine lederartige Textur bereit stellt und das zusätzliche Materialmuster eine Textur in einer Nahtform bereit stellt.

10. Verfahren nach Anspruch 7 oder 8, wobei das Materialmuster durch Filmentfernen oder Eigenschaftsändern eines Abschnitts der Farbschicht (122) unter Verwendung eines Lasers ausgebildet wird.

11. Verfahren nach einem der Ansprüche 7 bis 10, das weiterhin Folgendes umfasst:
Aufbringen einer Grundierschicht (126) auf den mit der Farbschicht versehenen Materialmustern,
wobei die SF-Überzugsschicht (128) auf einer Oberfläche der Grundierschicht (126) ausgebildet wird.

12. Verfahren nach einem der Ansprüche 7 bis 11, wobei das Aufdrucken des zusätzlichen Materialmusters Folgendes umfasst: Ausbilden einer Druckschicht (127), die sich wenigstens zum Teil von dem Materialmuster unterscheidet, mit Hilfe eines Direkten Digitaldruckverfahrens (DDP-Verfahren, Direct Digital Printing).

13. Abdeckungselement nach einem der Ansprüche 1 bis 6, wobei:
das Materialmuster mit einem ersten Materialmuster versehen ist, das zufällige Muster und regelmäßige oder unregelmäßige Rillen oder Vorsprünge umfasst, und
der Abschnitt der Farbschicht mit einem zweiten Materialmuster versehen ist, das eine Textur in einer Nahtform bereit stellt.

14. Abdeckelement nach Anspruch 13, wobei es sich bei dem zweiten Materialmuster um wenigstens eines der Folgenden handelt: einen Abschnitt der Außenfläche, der durch Filmentfernen des Abschnitts der Farbschicht (122) abgesetzt ist, eine Druckschicht (127) die mit Hilfe eines Direkten Digitaldruckverfahrens (DDP-Verfahren, Direct Digital Printing) wenigstens zum Teil auf die Farbschicht (122) aufgedruckt wird, und einen Abschnitt der Farbschicht (122), der durch Eigenschaftsändern des Abschnitts der Farbschicht (122) ausgebildet wird.

15. Abdeckungselement nach Anspruch 13, das weiterhin Folgendes umfasst:
eine Grundierschicht (126), die jeweils zwischen der Farbschicht (122) und der SF-Überzugsschicht (128) sowie zwischen dem zweiten Materialmuster (P3) und der SF-Überzugsschicht (128) ausgebildet ist, wobei die Grundierschicht (126) aus einem transparenten Material hergestellt ist.

## Revendications

1. Élément de protection comprenant :
un étui (120) sur au moins une partie duquel est formé un motif de matière,
une couche colorée (122) formée sur le dessus du motif de matière réalisé sur l'étui (120), et
une couche de revêtement à toucher doux (TD) (128) sur la couche colorée (122), ladite couche de revêtement à toucher doux (TD) (128) étant transparente,
**caractérisé en ce que**
le motif de matière est formé sur une face extérieure de l'étui (120),
la couche colorée (122) est disposée entre la couche de revêtement à toucher doux (TD) (128) et la face extérieure de l'étui (120), et
la couche colorée (122) comprend une partie marquée (123) qui est marquée au moins partiellement différemment du motif de matière et qui est exposée à la vue.

2. Élément de protection selon la revendication 1, comprenant en outre une couche d'enduction primaire (126) entre la couche colorée (122) et la couche de revêtement TD (128).

3. Élément de protection selon la revendication 2, dans lequel la couche d'enduction primaire (126) est formée sur la partie marquée (123) de la couche colorée (122).

4. Élément de protection selon l'une quelconque des revendications précédentes, dans lequel la partie marquée (123) de la couche colorée (122) comprend une couche imprimée (127), qui est imprimée au moins partiellement différemment du motif de matière, sur la couche colorée (122) au moyen d'un procédé d'impression numérique directe (DDP, Direct Digital Printing).

5. Élément de protection selon la revendication 4, comprenant en outre une couche d'enduction primaire (126) sur la couche colorée (122) et la couche imprimée (127).

6. Élément de protection selon l'une quelconque des revendications précédentes, dans lequel le motif de matière procure une texture ressemblant au cuir et la partie marquée (123) procure une texture en forme de couture.

7. Procédé de fabrication d'un élément de protection, le procédé comprenant :
la formation d'un étui (120) comprenant au moins un motif de matière sur au moins une partie de celui-ci,
l'application d'une couche colorée (122) sur le dessus du motif de matière,
l'application d'une couche de revêtement à toucher doux (TD) (128) transparente ;
**caractérisé par**
la formation du motif de matière sur une face extérieure de l'étui (120),
l'application de la couche colorée (122) sur le dessus du motif de matière, sur la face extérieure de l'étui (120),
l'application d'une partie marquée (123) sur la couche colorée (122) qui est marquée au moins partiellement différemment du motif de matière et exposée à la vue, et
l'application de la couche de revêtement à toucher doux (TD) (128) sur le dessus du motif de matière à application de couleur, sur la face extérieure de l'étui (120).

8. Procédé selon la revendication 7, comprenant l'étape de marquage d'un motif de matière supplémentaire sur une surface de l'étui à application de couleur.

9. Procédé selon la revendication 7 ou 8, dans lequel le motif de matière procure une texture ressemblant au cuir et le motif de matière supplémentaire procure une texture en forme de couture.

10. Procédé selon la revendication 7 ou 8, dans lequel le motif de matière supplémentaire est formé par élimination de film ou modification de propriété d'une partie de la couche colorée (122) par laser.

11. Procédé selon l'une quelconque des revendications 7 à 10, comprenant en outre :
l'application d'une couche d'enduction primaire (126) sur les motifs de matière à application de couleur,
dans lequel la couche de revêtement TD (128) est formée sur une surface de la couche d'enduction primaire (126).

12. Procédé selon l'une quelconque des revendications 7 à 11, dans lequel l'impression du motif de matière supplémentaire comprend la formation d'une couche imprimée (127) qui est au moins partiellement différente du motif de matière, au moyen d'un procédé d'impression numérique directe (DDP, Direct Digital Printing).

13. Élément de protection selon l'une quelconque des revendications 1 à 6, dans lequel :
le motif de matière est doté d'un premier motif de matière comportant un motif aléatoire, et des rainures ou reliefs réguliers ou irréguliers, et
la partie de la couche colorée est dotée d'un second motif de matière procurant une texture en forme de couture.

14. Élément de protection selon la revendication 13, dans lequel le second motif de matière consiste en au moins un élément parmi : une partie de la surface extérieure exposée par élimination de film de la partie de la couche colorée (122), une couche imprimée (127) qui est imprimée au moins partiellement sur la couche colorée (122) au moyen d'un procédé d'impression numérique directe, et une partie de la couche colorée (122) formée par modification de propriété de la partie de la couche colorée (122).

15. Élément de protection selon la revendication 13, comprenant en outre :
une couche d'enduction primaire (126) respectivement formée entre la couche colorée (122) et la couche de revêtement TD (128), et entre le second motif de matière (P3) et la couche de revêtement TD (128), ladite couche d'enduction primaire (126) se composant d'une matière transparente.
